# DEMANDE DE BREVET EUROPEEN

(11) **EP 1 283 012 A1**
(43) Date de publication de la demande: **12.02.2003**
(21) Numéro de dépôt: 01203016.9
(22) Date de dépôt: 09.08.2001
(51) Int. Cl.: A21D 13/08, A21D 8/02, A23G 9/02

(54) **Biscuit pour confiserie glacée**

(71) Demandeur: Société des Produits Nestlé S.A., 1800 Vevey (CH)
(72) Inventeur: Justi, Holger, 60000 Beauvais (FR)
(74) Mandataire: Archambault, Jean

(57) **Abrégé**

Biscuit reconstitué croquant et croustillant composé de fragments de biscuit cuit, agglomérés au sein d'un liant comprenant au moins un hydrate de carbone et de la matière grasse présentant la particularité de conserver sa croustillance lors du stockage à température négative.

Confiserie glacée composite comprenant un biscuit selon l'invention ainsi qu'une masse de confiserie glacée en contact avec ce biscuit. La confiserie glacée ainsi obtenue présente l'avantage du contraste de texture entre le crémeux de la masse de confiserie glacée et le croquant du biscuit et ceci même après un long stockage à température de congélation.

Procédé de préparation d'un tel biscuit.

## Description

La présente invention se rapporte au domaine de la biscuiterie et plus particulièrement au domaine de la biscuiterie adaptée aux confiseries glacées composites dans lesquelles une masse de confiserie glacée est associée à un biscuit.
De nombreux produits de type confiserie glacée comprenant du biscuit existent. Il peut s'agir par exemple de « cônes » dans lesquels de la crème glacée est contenue dans un gaufrette conique. Il peut s'agir encore de gateaux glacés comprenant un alternance de couches de crème glacée, sorbet et biscuit.
Le biscuit généralement utilisé est un biscuit relativement sec, friable et croustillant du type gauffrette, par exemple. Un tel type de biscuit est particulièrement souhaitable car il présente une bonne croustillance ainsi qu'une facilité de formage importante. Après assemblage de la crème glacée et du biscuit, le produit est conservé à l'état congelé. Cependant lors de ce stockage, le biscuit présente une tendance à une forte reprise d'humidité, tant depuis la crème glacée que depuis l'environnement externe. Une telle reprise d'humidité est dommageable aux qualités organoleptiques du biscuit, ce dernier devenant rapidement moux, spongieux et cahoutchouteux. Un solution possible à ce problème consiste à appliquer une couche barrière à base de matière grasse entre le biscuit et la crème glacée. Cependant, le problème n'est résolu qu'à moitié car la reprise d'humidité depuis l'extérieur n'est pas évitée. De plus, la présence d'une telle couche de matière grasse, solide aux température de surgélation, est mal perçue au plan organoleptique car elle ne fond pas simultanément avec la crème glacée et des résidus graisseux subsistent en bouche.

En ce qui concerne la forme des biscuits du type gaufrette, celle-ci est le plus souvent rectangulaire ou carrée et des formes ovales, rondes, elliptiques ou présentant un contour irrégulier ou découpé est très difficile à obtenir voire impossible tant du fait de la technologie mise en oeuvre lors de la fabrication de tels produits que de leur fragilité. D'autre part, bien que ces gaufrettes se prètent bien à la réalisation de formes tridimensionnelles diverses telles que cônes ou hémisphères, elle nécessitent d'être chauffées pour assurer leur malléabilité afin d'épouser les formes du moule. Outre le fait qu'elle est onéreuse, une telle étape de mise en forme à chaud complique le procédé de fabrication de confiseries glacées car cela nécessite un refroidissement afin d'éviter un choc thermique avec la masse de confiserie glacée lors du remplissage ou de la mise en contact.

Finalement, le but de la présente invention vise à résoudre ces différents problèmes et consiste à fournir un biscuit que l'on peut facilement former à froid en n'importe quelle forme plane ou tridimensionnelle, qui est croustillant et croquant, qui ne s'effrite pas lors de sa manipulation et qui, lorqu'il est employé en combinaison avec de la crème glacée pour confectionner une confiserie glacée conserve de telles qualités pendant et après le stockage aux températures de congélation usuelles.

A cet effet l'invention concerne un biscuit reconstitué composé de fragments de biscuit cuit, agglomérés au sein d'un liant comprenant au moins un hydrate de carbone et de la matière grasse, le biscuit présentant la particularité de conserver son intégrité physique, sa forme et sa croustillance lors d'étapes de manipulation et/ou de stockage à température négative.

La présente invention concerne aussi une confiserie glacée composite comprenant un biscuit selon l'invention ainsi qu'une masse de confiserie glacée en contact avec ce biscuit. Ainsi, grâce à la formulation du biscuit selon l'invention, la confiserie glacée obtenue présente-t-elle l'avantage du contraste de texture entre le crémeux et le fondant de la masse de confiserie glacée et le croustillant et le croquant du biscuit et ceci même après un long stockage à température de congélation, c'est à dire une température inférieure à -8°C, préférentiellement inférieure à -10°C.

Par l'expression « fragments de biscuit », on entend qu'il s'agit de particules de biscuit cuit obtenues après brisure de biscuits traditionnels. Lesdites particles peuvent se présenter sous la forme d'une sphère plus ou moins grossière. La distribution statistique des particules est telle qu'environ au moins 60% de ces particules présentent un diamètre moyen compris entre 2 et 3 mm environ, de préférence au moins 90% de ces particules présentent un diamétre moyen compris entre 1 et 3 mm environ.

Par l'expression « masse de confiserie glacée » on entend principalement une composition glacée à base de produit laitier tels que la crème glacée ou les yogurts glacés mais aussi les sorbets ou glaces à l'eau.

Ainsi grâce à la présence du liant comprenant au moins un hydrate de carbone et matière grasse au sein du biscuit selon l'invention, celui-ci conserve sa croustillance tout au long du stockage à basse température malgré l'absence de couche barrière hydrophobe entre la crème glacée et le biscuit. En effet les fragments de biscuit qui assurent la croustillance du biscuit conservent cette croustillance grâce à la matière grasse provenant du liant. Cette matière grasse joue-t-elle ainsi un rôle barrière à l'humidité et protège individuellement chaque fragment de biscuit de la migration d'eau tant depuis la crème glacée que depuis l'atmosphère ambiante. Cette matière grasse, solide aux température de congélation, permet d'isoler les fragments de biscuit d'une quelconque reprise d'humidité depuis la crème glacée ou depuis l'environnement externe. De plus, du fait qu'elle ne constitue pas un revètement présentant une notable épaisseur, elle est imperceptible lors de la comsommation du biscuit ce qui évite le problème de sensation graisseuse en bouche. Ces particules de biscuit ainsi piégées dans la masse de totale du biscuit reconstitué de l'assemblage formé avec la crème glacée confère croustillance et croquant au biscuit dans son intégralité.

L'hydrate de carbone rentrant dans la composition du liant peut être choisi dans le groupe comprenant saccharose, maltodextrine ou sirop de glucose, utilisés seuls ou en mélange, par exemple. Le liant peut comprendre de 20 à 40 % de matière grasse, 50 à 75 % d'hydrate de carbone et 0,01 à 5 % d'au moins un émulsifiant.

Finalement la présente invention concerne aussi un procédé de fabrication d'un biscuit reconstitué dans lequel :
- on chauffe un mélange comprenant 50 à 75 parts de matière grasse solide à température ambiante et 20 à 40 parts d'hydrate de carbone à une température et pendant un temps suffisants pour à assurer la fonte de la matière grasse,
- on mélange 60 à 90 parts du mélange précédent avec 10 à 30 parts de particules de biscuit,
- on refroidi le mélange sous agitation jusqu'à une température inférieure au point de fusion de la matière grasse,
- on prépare un sirop en chauffant sous agitation un mélange comprenant 50 à 80 parts d'hydrate de carbone, 20 à 50 parts d'eau, 2 à 10 parts de matière grasse solide à température ambiante et 0,01 à 5 part d'au moins un émulsifiant, à une température et pendant un temps suffisant pour assurer dissolution et émulsification des ingrédients,
- on refroidi le sirop ainsi préparé à une température inférieure au point de fusion de la matière grasse du mélange comprenant les particules de biscuit,
- on mélange 40 à 80 parts du mélange comprenant les particules de biscuit avec 20 à 60 parts de sirop de manière à obtenir une masse malléable,
- on forme la masse sous forme de biscuit,
- et on durci le biscuit obtenu par évaporation de l'eau contenue de manière à obtenir un produit présentant une humidité comprise entre 1 et 5%.

Ainsi dans une première étape, on prépare un mélange d'enrobage à base de matière grasse solide à température ambiante et d'hydrate de carbone qui va servir à enrober les particules de biscuit. Ce mélange d'enrobage comprend ainsi entre 50 et 75% de matière grasse solide à température ambiante et 20 à 40% d'hydrate de carbone. La matière grasse en question peut être un huile végétale hydrogénée ou partiellement hydrogénée telle qu'une huile de coco hydrogénée, par exemple. La matièe grasse peut ainsi être chauffée à une température supérieure à son point de fusion, par exemple aux alentours de 45-50°C et l'hydrate de carbone est alors ajouté puis l'ensemble peut être mélangé et homogénéisé dans un mélangeur à rouleaux, par exemple.

Par la suite, des particules de biscuit sont ajoutées au mélange d'enrobage à raison de 60 à 90 parts de particules de biscuit pour 10 à 30 parts de mélange d'enrobage. Le mélange obtenu est ensuite refroidi lentement sous agitation jusqu'à une température inférieure au point de fusion de la matière grasse du mélange d'enrobage.

Parallèlement on prépare un sirop en chauffant à une température de l'ordre de 80 à 120°C un mélange comprenant 50 à 80 part d'hydrate de carbone qui peut être du saccharose cristallisé, 20 à 50 parts d'eau, 2 à 10 part de matière grasse solide à température ambiante et 0,01 à 5% d'au moins un émulsifiant. La matière grasse solide à température ambiante mise en oeuvre pour la fabrication de ce sirop peut être de identique que celle entrant dans la composition du mélange d'enrobage. L'émulsifiant peut être choisi dans le groupe comprenant des monoglycérides, des diglycerides, des lecithines, utilisés seuls ou en mélange. Le sirop est mélangé et homogénéisé de manière à assurer l'émulsification des ingrédients. Le sirop peut être ensuite refroidi aux alentours de la température ambiante, c'est à dire 20 à 30°C, de manière à se situer à une température inférieure au point de fusion des matières grasses du sirop et du mélange d'enrobage.
Enfin mélange d'enrobage comprenant les particules de biscuit et sirop sont mélangés dans un ratio 40 à 80 parts de mélange pour 60 à 20 parts de sirop.
Le mélange obtenu est homogénéisé de manière à former une sorte de pâton malléable qui va pouvoir être formé à température ambiante selon n'importe quelle forme désirée. Ce pâton présente une humidité de l'ordre de 5 à 15 %. Les biscuits reconstitués obtenus peuvent ensuite être laissés de côté pour refroidissement puis stockés en emballage cartonné.

Le formage de la masse à biscuit peut être réalisé à température ambiante. Ce formage peut être réalisé par extrusion, par moulage voire par laminage. De préférence, le formage est réalisé par pressage dans un moule ayant la forme désirée, par exemple. Il peut ainsi s'agir d'un moule parallélépipédique qui est rempli de la masse à biscuit qui est ensuite tassée et compréssée de manière à comprimer et agglomérer les particules et épouser ainsi les formes et les détails du moule. De par la malléabilité de la masse à biscuit selon l'invention des formes diverses et variées peuvent être obtnues telles que des triangles, des disques, des ovales. De plus, cette étape de formage peut aussi être réalisée à l'aide d'un moule tridimensionnel ; la masse de biscuit est introduite dans un moule creux de forme souhaitée et une pièce complémentaire forme le biscuit par compression. Il peut ainsi s'agir d'un poinçon pointu comprimant la masse dans un moule conique pour former une biscuit du type cône ou d'un poinçon arrondi comprimant la masse en question dans un moule hémisphérique de manière à former une sorte de coque hemisphérique en masse à biscuit. Un fois une forme plane réalisée, celle-ci peut aussi être formée sous la forme d'un cylindre qui pourra être rempli de masse de confiserie glacée, par exemple. Le biscuit reconstitué formé peut présenter l'épaisseur typique d'un biscuit traditionnel, c'est à dire 2 à 20 mm environ et de manière préférentielle 3 à 10 mm environ. L'épaisseur du biscuit reconstitué n'est pas nécessairement uniforme et peut varier dans la fourchette définie ; ainsi un biscuit de forme hémisphérique peut présenter un fond plus épais que les parois, par exemple.
La masse pour biscuit peut ainsi être préssée dans un moule conique à l'aide d'un poinçon pour obtenir un bicuit en forme de cône qui servira de réceptacle pour la masse de confiserie glacée glacée. La mise en forme peut aussi s'effectuer par extrusion ou laminage de la masse de biscuit sous la forme de plaques ou de bandes qui peuvent être découpées aux dimensions voulue et servir ainsi à la confection de sanwiches glacés comprenant une portion de crème glacée entre deux biscuits. Les bandes pour biscuit peuvent être découpées à l'aide d'emporte-pièces de manière à obtenir des formes attractives, tels que des disques, des ovales avec des bords sinueux, voire des figurines par exemple. Enfin, la masse pour biscuit peut aussi être compactée dans un moule de forme quelconque de manière à en épouser les formes, puis remplie de crème glacée.
Après l'étape de formage, le biscuit va pouvoir subir une étape de séchage plus ou moins poussé de manière à lui assurer la croustillance maximale, ce qui correspond à une humidité finale du biscuit reconstitué de l'ordre de 1 à 5%. Le séchage peut être réalisée par passage du biscuit formé dan sun tunnel de séchage à air chaud, à une température de l'ordre de 40 à 150°C par exemple, pendant un temps de l'ordre de 10 à 60 minutes, par exemple. L'étape de séchage sert en premier lieu à assurer le durcissement final du biscuit reconstitué mais peut contribuer aussi à son developpement aromatique. En effet, lors de cette étape de séchage, l'eau résiduelle s'évapore en partie, l'hydrate de carbone du liant cristallise et l'ensemble durci, ce qui confère au produit final sa texture croquante et croustillante et grâce aux réactions de Maillard pouvant occurer lors de cette étape de séchage, des arômes peuvent aussi se developper.
La masse à biscuit selon l'invention présente l'avantage de pouvoir être formée selon quasiment n'importe quelle forme, et ceci à température ambiante à l'aide d'équipements classique de l'industrie tels que laminoir, extrudeur, emporte pièces ou de simple moules. Un tel biscuit présente l'avantage, outre le fait de conserver sa croustillance, de présenter un formage aisé à température ambiante, ce qui est plus économique et de plus ne pose pas le problème d'un éventuel choc thermique et évite une étape de refroidissement, contrairement à ce qui se fait avec les gaufrettes. De plus, la masse à biscuit selon l'invention peut être reformée à l'infini sans chauffage préalable.

Le biscuit reconstitué selon la présente invention de par ses propriétés de croustillances et grâce au liant revétant les particules de biscuit cuit se prète ainsi particulièrement bien à des application de confiseries glacées dans lesquelles ce biscuit est combiné à une masse de confiserie glacée, telle que de la crème glacée par exemple. La présente invention concerne donc aussi une confiserie glacée composite comprenant un biscuit selon la presente invention en contact avec une masse de confiserie glacée. Les confiseries glacées selon l'invention peuvent ainsi se présenter sous la forme de biscuits côniques, de dômes voire de tubes de biscuit remplis de crème glacée et eventuellement revétus partiellement ou entièrement de chocolat mais aussi des sanwiches glacés comprenant une masse de confiserie glacée maintenue entre deux biscuits par exemple. Ces confiseries peuvent aussi se présenter sous la forme de gateaux glacés dans lesquels alternent des couches de crème glacée et de biscuit tels que des milles-feuilles glacés ou des sanwiches glacés, par exemple. D'autre part, les confiserie glacée composite selon la présente invention peuvent aussi se présenter sous la frome d'une masse de confiserie glacée comprenant des morceaux de biscuit aleatoirement dispersés en son sein ce qui permet d'assurer un contraste de texture agréable lors de la consommation entre le croquant du biscuit et le crémeux de la crème glacée, le cas écheant.

### EXEMPLE 1 : Fabrication d'un bisuit

### Préparation du mélange d'enrobage et enrobage :

66,7 parts d'huile de coco hydrogénée sont chauffées à 45 °C puis 33,3 parts de sucre glace sont ajoutés et le mélange est homogénéisé.
20 parts de ce mélange sont mélangés avec 80 parts de brisure de biscuit du type « petit beurre » de granulométrie moyenne 1,5 mm. L'ensemble est refroidi jusqu'à température ambiante.

### Préparation du sirop :

Un mélange comprenant 67 parts de saccharose, 28 parts d'eau, 5 parts d'huile coco hydrogénée et 0,2 parts de monodiglycéride d'acide gras saturé est chauffé aux alentours de 106 °C et homogénéisé de manière à assuer une bonne émulsification du mélange graisse/huile/sirop de sucre. Le sirop obtenu est refroidi lentement jusqu'aux alentours de 25°C.

### Préparation du pâton :

50 parts de sirop sont mélangés et homogénéisés à 50 parts de mélange comprenant les brisures de biscuit.

### Formage :

Des aliquotes de pâton sont disposés et compressés dans des moules rectangulaires aux coins arrondis de 10 cm x 12 cm et 5mm de profondeur.
Les biscuits formés sont démoulés et disposés sur une plaque en tôle graissée.

### Durcissement :

Les biscuits formés sont séchés et durcis par passage dans un four à air pulsé à 80°C pendant 17 minutes.

Les biscuits obtenus présentent une humidité résiduelle de 2%, sont croustillants et croquants tout en étant aisément manipulables sans risquer de se briser.

### EXEMPLE 2 : confiserie glacée composite.

Les biscuits tels qu'obtenus à l'exemple 1 sont utilisés pour fabriquer une confiserie glacée comprenant de la crème glacée à la vanille.

La crème glacée est fabriquée à partir des ingrédient suivants :
10 parts de poudre de lait
0,5 part d'émulsifiant (CREMODAN ®)
0,5 part d'arome vanille
8 parts de graisse végétale hydrogénée
14 parts de sucre
4 parts de sirop de glucose
63 parts d'eau

Les différents ingrédients sont disperés à 65 °C pendant 20 minutes. Le mélange est ensuite homogénéisé à 180 bars puis pasteurisé à 86 °C pendant 20 secondes. Après refroidissement à 5 °C, le mélange est maturé pendant 24 heures à 4 °C. Enfin, le mélange est congelé aux environ de -5 °C avec un foisonnement de 100 %. La crème glacée obtenue est durcie en bac à -30 °C par des moyens conventionnels.

Un parallélépipède de crème glacée à la vanille de 10 cm x 12 cm et de 2 cm d'épaisseur est découpé et disposé en sandwich entre deux biscuits (préalablement refroidis à 5°C) tels qu'obtenus à l'exemple 1.
Le produit est stocké à -18°C pendant 3 mois. Lors de la consommation le biscuit de la confiserie glacée ne s'effrite pas, n'est pas craquelé et présente des caractéristiques de croustillance et de croquant similaires à celles du produit au début du stockage.

## Revendications

1. Biscuit reconstitué composé de fragments de biscuit cuit, agglomérés au sein d'un liant comprenant au moins un hydrate de carbone et de la matière grasse, le biscuit présentant la particularité de conserver son intégrité physique, sa forme et sa croustillance lors d'étapes de manipulation et/ou de stockage à température négative.

2. Biscuit selon la revendication 1, **caractérisé en ce que** le liant comprend 20 à 40 % de matière grasse, 50 à 75 % d'au moins un hydrate de carbone et 0,01 à 5 % d'au moins un émulsifiant.

3. Biscuit selon la revendication 1, **caractérisé en ce que** la distribution statistique des particules est telle qu'au moins 60% de ces particules présentent un diamètre moyen compris entre 2 et 3 mm environ.

4. Biscuit selon la revendication 1, **caractérisé en ce que** la distribution statistique des particules est telle qu'au moins 90% de ces particules présentent un diamètre moyen compris entre 1 et 3 mm environ.

5. Biscuit selon les revendications 1 et 2, **caractérisé en ce que** la matière grasse est une matière grasse végétale hydrogénée.

6. Biscuit selon les revendications 1 et 2, **caractérisé en ce que** l'hydrate de carbone du liant est choisi dans le groupe constitué du saccharose, maltodextrine, sirop de glucose utilisés seuls ou en mélange.

7. Biscuit selon les revendications 1 et 2, **caractérisé en ce qu'**il présente un taux d'humidité compris entre 1 et 5%.

8. Confiserie glacée composite comprenant un biscuit selon l'une des revendications 1 à 6 en contact avec une masse de confiserie glacée.

9. Procédé de fabrication d'un biscuit reconstitué dans lequel :
- on chauffe un mélange comprenant 50 à 75 parts de matière grasse solide à température ambiante et 20 à 40 parts d'au moins un hydrate de carbone à une température et pendant un temps suffisants pour à assurer la fonte de la matière grasse,
- on mélange 60 à 90 parts du mélange précédent avec 10 à 30 parts de particules de biscuit,
- on refroidi le mélange sous agitation jusqu'à une température inférieure au point de fusion de la matière grasse,
- on prépare un sirop en chauffant sous agitation un mélange comprenant 50 à 80 parts d'au moins un hydrate de carbone, 20 à 50 parts d'eau, 2 à 10 parts de matière grasse solide à température ambiante et 0,01 à 5 part d'au moins un émulsifiant, à une température et pendant un temps suffisant pour assurer dissolution et émulsification des ingrédients,
- on refroidi le sirop ainsi préparé à une température inférieure au point de fusion de la matière grasse du mélange comprenant les particules de biscuit,
- on mélange 40 à 80 parts du mélange comprenant les particules de biscuit avec 20 à 60 parts de sirop de manière à obtenir une masse malléable,
- on forme la masse sous forme de biscuit,
- et on durci le biscuit obtenu par évaporation de l'eau contenue de manière à obtenir un produit présentant une humidité comprise entre 1 et 5%.

10. Procédé selon la revendication 9, **caractérisé en ce que** l'étape de durcissement est réalisée par séchage avec de l'air chaud à une température comprise entre 40 et 150°C, pendant 10 à 60 minutes.
